# EUROPÄISCHE PATENTSCHRIFT

(11) **EP 4 402 635 B1**
(45) Veröffentlichungstag und Bekanntmachung des Hinweises auf die Patenterteilung: **04.06.2025**
(21) Anmeldenummer: 22773649.3
(22) Anmeldetag: 07.09.2022
(51) Int. Cl.: G06T 7/246

(54) **VERFAHREN ZUR LADUNGSÜBERWACHUNG**
CARGO MONITORING METHOD
PROCÉDÉ DE SURVEILLANCE DE CHARGEMENT

(30) Priorität: 13.09.2021 DE 102021123581
(43) Veröffentlichungstag der Anmeldung: 24.07.2024
(73) Patentinhaber: ZF CV Systems Global GmbH, 3006 Bern (CH)
(72) Erfinder: FEYERABEND, Konrad, 30625 Hannover (DE); KÜHNE, Sebastian, 31157 Sarstedt (DE); ZYMERI, Gafur, 30952 Ronnenberg (DE)
(74) Vertreter: Rabe, Dirk-Heinrich
(86) Internationale Anmeldenummer: PCT/EP2022/074783
(87) Internationale Veröffentlichungsnummer: WO 2023/036793

(56) Entgegenhaltungen:
- EP-B1- 3 232 404
- DE-A1- 102014 226 108
- DE-A1- 102017 212 596
- US-A1- 2017 372 484
- US-A1- 2019 065 888

## Beschreibung

Die Erfindung betrifft ein Verfahren zur Erfassung von sich bewegenden Körpern oder Ladungsteilen im Inneren eines Laderaums, wobei der Laderaum mit mindestens einem abstandsmessenden, tiefenempfindlichen Sensor dreidimensional vermessen wird und die aktuellen Abstände von Messpunkten oder Messpunktmengen etwaiger im Laderaum befindlicher Körper oder Ladungsteile vom Sensor als Messwerte in Form von 3D-Daten erfasst werden.

Die Überwachung von Laderäumen durch Überwachungssysteme, insbesondere durch elektronische Systeme, nimmt bei den heutigen Verkehrsströmen und den Anforderungen an die Logistik von Gütern einen immer breiteren Raum ein. Insbesondere die Laderäume von Lkw und von Containern stehen in dieser Hinsicht bei Flottenbetreibern, Speditionen und Versandhandel im Fokus und müssen möglichst effizient genutzt und auf einem hohen Sicherheitsniveau betrieben werden.

Einerseits sind dabei Be- und Entladevorgänge zu berücksichtigen, was dadurch erfolgen kann, dass die Körper oder Ladungsteile, die in einen Laderaum verladen werden, vor oder während der Verladung gemessen, gescannt oder in anderer Weise bestimmt werden.

Andererseits ist es bei den heutigen großvolumigen Laderäumen unbedingt erforderlich, die Ladung auf mögliche Bewegungen oder Veränderungen ihrer Position zu überwachen, insbesondere auf Positionsänderung, die durch Transportvorgänge entstehen, also während der Fahrt. Dies kann durch regelmäßige Kontrollen des Fahrers während der Fahrt geschehen, aber auch durch Hilfsmittel, wie etwa Spanngurte mit Zugkraft-Messeinrichtungen, oder durch automatisierte Verfahren der Erkennung von Positionsveränderungen von Ladungsteilen.

Im Hinblick auf die zuerst erwähnte Detektion von Ladungsteilen als solchen sind im Stand der Technik Verfahren bekannt, bei denen etwa Kameras an Gabelstaplern montiert sind, die während der Verladung die einzelnen Ladungsstücke scannen und die Ergebnisse zu einer Gesamtladung bzw. zu einem Füllungsgrad innerhalb des Laderaums aufaddieren. Andere Lösungen arbeiten mit an Ladungsteilen befestigten RFID-Tags/-Etiketten (RFID: engl. *radio frequency identification,* dt. Funkwellen-Identifikation), die während der Verladung oder innerhalb des Laderaums von entsprechenden Antennen im Laderaum oder etwa im Verladebereich an der Rampe detektiert werden. Eine genaue Bestimmung eines örtlich bestimmten Ladungszustands innerhalb des Laderaums ist dadurch nur bedingt möglich.

Diesbezüglich zeigt der Stand der Technik auch Verfahren, bei denen mit Hilfe rechnergestützter Vermessungen einzelne Ladungsteile örtlich bestimmt und nach Größe oder Abmessung identifiziert werden können. So offenbart die EP 3 232 404 A1 ein Verfahren und ein System für die Vermessung der Dimensionen eines Zielobjektes bzw. eines Ladungsteils auf einer Palette oder auf einem Träger, wobei mithilfe eines Sensors oder einer tiefenempfindlichen Kamera ein 3D-Datensatz ermittelt wird, der mithilfe von Tiefendaten, also Abstandsdaten (Abstand vom Sensor), den dreidimensionalen, physikalischen Raum beschreibt, den das Zielobjekt einnimmt.

Auch für die aus Sicherheitsgründen wichtige Überwachung der Ladung auf mögliche Bewegungen oder Veränderungen ihrer Position, also in Bezug auf die Erfassung von sich bewegenden Körpern oder Ladungsteilen im Inneren eines Laderaums, sind im Stand der Technik rechnergestützte Verfahren bekannt.

Die US 10,163,219 B2 offenbart dazu ein Verfahren zur Anzeige einer veränderten Ladungsposition, bei dem mit Hilfe einer Kamera und einer Bildverarbeitungssoftware zu einem Anfangszeitpunkt die Position eines Ladungsteils erkannt werden kann, beispielsweise durch eine Kantenerkennung (*edge detection*)*.* Die erkannte Position wird dann dem Fahrer auf einem Bildschirm dargestellt. Der Fahrer muss dann die Erkennung des Ladungsteils und dessen Position manuell bestätigen, etwa durch Antippen der angezeigten Position auf dem Bildschirm (*prompting*)*.* Mit Hilfe von periodischen weiteren Durchläufen der Zustandserkennung durch Kamera und Bildverarbeitungssoftware wird danach festgestellt, ob sich die Position des Ladungsteils verändert hat und dann gegebenenfalls ein Signal erzeugt. Hier kann also mit einem halbautomatischen Verfahren lediglich erkannt werden, dass eine Veränderung erfolgt ist. Eine dynamische Betrachtung und Interpretation der Art der Bewegung ist jedoch nicht möglich.

Die US 2019/0065888 A1 offenbart die Überwachung eines Laderaums mit Hilfe einer tiefenempfindlichen TOF-Kamera (TOF: engl. *time of flight*), mit deren Hilfe zunächst ein Laderaum tiefenvermessen wird, danach derselbe Laderaum mit zusätzlichen oder entfernten Ladungsteilen, wonach schließlich beide Aufnahmen verglichen werden und zugeladene oder entladene Gegenstände ermittelt werden. Eine genauere und nacharbeitbare Darstellung des Vergleichsverfahrens ist nicht offenbart. Bezogen ist die Messung immer auch auf eine Aufnahme der gesamten Laderaumszenerie, bzw. auf das Gesamtvolumen. Eine Aussage über das detaillierte Verhalten eines einzigen Ladungsteils erfolgt nicht.

Die im Stand der Technik bekannten Verfahren zur Überwachung von Bewegungen oder Veränderungen der Position von Ladungsteilen sind also lediglich in der Lage, Abweichungen der Position eines vorab bestimmten bzw. manuell identifizierten Ladungsteils zu erkennen und können in aller Regel nur feststellen, ob eine Bewegung oder Veränderung der Position stattgefunden hat, jedoch nicht, wie der dynamische Verlauf dieser Bewegung sich gestaltet. Das heißt also, dass mit den im Stand der Technik bekannten Verfahren zwar detektierbar ist, dass eine Bewegung/Veränderung stattgefunden hat, dass aber keine valide Aussage darüber getroffen werden kann, welcher Art von Bewegung oder Positionsveränderung vorliegt, ob beispielsweise also lediglich ein Schwanken oder Wackeln von Ladungsteilen vorhanden ist oder aber ein vollständiges Kippen oder Verschieben/Verrutschen der Ladung stattfindet bzw. stattgefunden hat. Die Erkennung ist also reduziert auf die im Wesentlichen binäre Aussage, ob eine Bewegung stattgefunden hat oder nicht.

Natürlich gibt es im Stand der Technik innerhalb verschiedenster Anwendungsfelde eine Reihe von allgemein verwendbaren Sensoren und Verfahren, um Bewegungen zu erkennen, etwa im industriellen Bereich, in der häuslichen Anwendung oder bei Sicherheitseinrichtungen. Im Wesentlichen wird dabei zwischen aktiven und passiven Bewegungssensoren unterschieden. Aktive Sensoren besitzen einen Sender und einen Empfänger und messen üblicherweise Veränderungen innerhalb des Laufweges eines ausgesandten Energiestrahls. Passive Sensoren reagieren auf veränderte Strahlung in der beobachteten Umgebung, beispielsweise auf veränderte Infrarotstrahlung durch Personen oder Gegenstände. Die Anwendung solcher Systeme verlangt einen relativ komplexen Aufbau und muss auf die zu überwachenden Gegenstände oder Körper angepasst sein. Bei unterschiedlichen zu überwachenden Objekten sind gegebenenfalls auch mehrere Sensoren mit unterschiedlichen Meßprinzipien erforderlich, um eine sichere Aussage zu treffen. Die Anwendung solcher in anderen Bereichen üblichen Systeme zur Bewegungserkennung hat sich nicht nur aus diesen Gründen innerhalb von Laderäumen nicht durchgesetzt, sondern ist auch in ökonomischer Hinsicht nicht die erste Wahl.

Die Aufgabe der vorliegenden Erfindung besteht demnach in der Bereitstellung eines verbesserten Verfahrens zur Überwachung von Ladungsteilen innerhalb von Laderäumen, mit dem nicht nur die Position im Laderaum befindlicher Körper oder Ladungsteile als solche vermessen und ihre etwaigen Bewegungen ermittelt werden können, sondern welches auch eine dynamische Analyse der Art der Bewegung ermöglicht und mit dem der Ort der Körper oder Ladungsteile und die Veränderung des Ortes innerhalb des Laderaums qualitativ bestimmt werden können. Weiterhin besteht die Aufgabe darin, ein Verfahren bereitzustellen, welches ohne einen zu umfangreichen Eingriff auf andere umgebende Systeme anzuwenden ist, welches ausreichend sichere Ergebnisse zur Bestimmung und Überwachung eines Laderaums liefert und welches für beliebig ausgebildeten Laderäume einsetzbar ist.

Gelöst wird diese Aufgabe durch die Merkmale des Hauptanspruchs. Weitere vorteilhafte Ausbildungen sind in den Unteransprüchen offenbart. Ebenfalls offenbart ist eine Einrichtung zur Durchführung des Verfahrens sowie ein Fahrzeug mit einem Laderaum, der mit der Einrichtung ausgerüstet ist.

Dabei wird der Laderaum mit mindestens einem abstandsmessenden, tiefenempfindlichen Sensor dreidimensional vermessen, wobei in einem ersten Schritt die einen jeden Messpunkt etwaiger im Laderaum befindlicher Körper oder Ladungsteile beschreibenden 3D-Daten als eine erste Datenmenge, eine so genannte 3D-Punktwolke, in einer Rechen- und/oder Auswerteeinheit gespeichert und optional mit einem Zeitstempel versehen werden. Ein solcher Zeitstempel ist nicht unbedingt erforderlich, da zur Darstellung der Abfolge der Messungen auch mit Indizierungen/Seriennummern, mit denen jede Datenmenge versehen wird, mit einer sequenziellen Ablage/Speicherung oder mit festen Zeitintervallen der Messung gearbeitet werden kann.

In einem zweiten Schritt wird mindestens eine weitere, nachfolgende dreidimensionale Messung durchgeführt, wobei die die entsprechenden Messpunkte beschreibenden 3D-Daten der im Laderaum befindlichen Körper oder Ladungsteile in der Rechen- und/oder Auswerteeinheit als weitere Datenmengen gespeichert und optional ebenfalls mit einem Zeitstempel versehen werden.

Danach werden entweder in einem dritten Schritt die 3D-Daten der einzelnen, örtlich korrespondierenden Messpunkte der ersten und der weiteren Messung oder Messungen mittels eines in der Rechen- und/oder Auswerteeinheit programmierten Algorithmus miteinander verglichen, wobei in dem Fall, dass Änderungen der 3D-Daten von sich räumlich entsprechenden Messpunkten der ersten und der weiteren Datenmenge detektiert werden, wie im Folgenden beschrieben ein vierter und weitere Schritte des Verfahrens ausgeführt werden, oder es wird der im Folgenden beschriebene vierte Schritt ohne vorheriges Vornehmen des dritten Schritts ausgeführt.

Eine vorteilhafte Ausbildung des dritten Schritts besteht dabei darin, dass im dritten Schritt die 3D-Daten der ersten und der weiteren Messung oder Messungen miteinander verglichen werden und in dem Fall, dass eine einen vorgegebenen Schwellenwert überschreitende Anzahl von Änderungen der 3D-Daten detektiert wird, die im Folgenden erläuterten Verfahrensschritte ausgeführt werden. Die Berücksichtigung eines solchen Schwellenwertes ist beispielsweise sinnvoll, um zufällige oder nicht stabile Messdaten auszufiltern.

In dem vierten Schritt werden die erste und die weiteren Datenmengen (3D-Punktwolken) mittels eines Algorithmus daraufhin geprüft, ob Teilmengen der darin enthaltenen 3D-Daten einen dreidimensionalen Körper oder ein Ladungsteil beschreiben oder kennzeichnen, wobei zutreffendenfalls diese 3D-Daten als ein einen dreidimensionalen Körper oder Ladungsteil (Volumen) kennzeichnendes 3D-Datencluster (Teilmenge) gespeichert, indiziert und optional ebenfalls mit einem Zeitstempel versehen werden.

Danach erfolgt ein fünfter Schritt, in dem die 3D-Datencluster der ersten und weiteren Datenmengen, welche aus örtlich korrespondierenden Messpunkten oder Messpunktmengen ermittelte dreidimensionale Körper oder Ladungsteile kennzeichnen, mittels des Algorithmus in der Rechen- und/oder Auswerteeinheit miteinander verglichen werden. Für den Fall, dass bei dem Vergleich der 3D-Datencluster für örtlich korrespondierende dreidimensionale Körper oder Ladungsteile der ersten und weiteren Datenmengen Änderungen der 3D-Datencluster ermittelt werden, die räumliche Änderungen der örtlich korrespondierenden dreidimensionalen Körper oder Ladungsteile innerhalb eines Zeitintervalls kennzeichnen, wird von der Rechen- und/oder Auswerteeinheit ein diese Änderungen beschreibendes und weiter verarbeitbares Signal bereitgestellt.

Die Bezeichnung "örtlich korrespondierende Messpunkte oder Messpunktmengen" beschreibt dabei die Messpunkte innerhalb der Grenzen eines zu vermessenen Raumes, die an derselben örtlichen Position vermutet werden bzw. dieselbe örtliche Position beschreiben oder einnehmen wie bei der vorlaufenden Messung, also grundsätzlich denselben Ort im dreidimensionalen Koordinatensystem kennzeichnen. Um Änderungen der örtlich korrespondierenden Messpunkte festzustellen, kann beispielsweise so vorgegangen werden, dass durch den Algorithmus um den genauen ursprünglichen ermittelten Wert ein dreidimensionaler Erwartungsraum oder Erwartungsbereich gelegt wird, in dem sich eine Abweichung bewegen darf und trotz einer absoluten Abweichung in mindestens einer Dimension noch als örtlich korrespondierender, aber "geänderter" Messpunkt angesehen wird.

Örtlich korrespondierende dreidimensionale Körper oder Ladungsteile sind zu verstehen als durch 3D-Datencluster beschriebene Volumina jeglicher Art und umfassen eine rechteckige Kiste ebenso wie einen beliebig geformten Körper.

Der in dem dritten verfahrensgemäßen Schritt erfolgende Vergleich der 3D-Daten der Datenmengen kann auch so erfolgen, dass nicht die direkt vorlaufende 3D-Datenmenge mit der nachfolgenden Datenmenge verglichen wird, sondern dass auf eine weiter zurückliegende vorhergehende Datenmenge zurückgegriffen wird. Dies kann dann erforderlich sein, wenn innerhalb eines Messzyklus Unregelmäßigkeiten aufgetreten sind, die vermuten lassen, dass die Qualität der vorlaufenden Datenerfassung unzureichend ist.

Eine vorteilhafte Ausbildung besteht dabei darin, dass bereits während des ersten und zweiten Schrittes der dreidimensionalen Vermessung der im Laderaum befindlichen Körper oder Ladungsteile deren Parameter insbesondere in Hinblick auf ihre Position und jeweils ihre Breite, Höhe und Tiefe als 3D-Datencluster gespeichert und indiziert werden. Im Rahmen einer solchen vorteilhaften Verfahrensweise ist eine gewisse Variation in der Reihenfolge der Verarbeitungsschritte möglich, wobei beispielsweise auch wie oben beschrieben die Durchführung des vierten Verfahrensschritts unabhängig vom dritten Verfahrensschritt ermöglicht wird. Eine Variation umfasst ggf. im Wesentlichen eine Zusammenfassung oder Kombination von Verfahrensschritten und verlässt in diesem Sinne auch nicht den ursprünglichen Rahmen des erfindungsgemäßen Verfahrens, stellt also kein Aliud dar.

Zurückkommend auf den ersten Schritt wird dabei also das Innere des Laderaums mit einem abstandsmessenden, tiefenempfindlichen Sensor (*depth-aware sensor*) dreidimensional vermessen. Dazu werden die einen jeden Messpunkt etwaiger im Laderaum befindlicher Körper oder Ladungsteile beschreibenden 3D-Daten als eine erste Datenmenge (3D-Punktwolke) gespeichert und optional mit einem Zeitstempel versehen. Im zweiten Schritt erfolgt dann mit Hilfe des Sensors mindestens eine weitere, nachfolgende, entsprechende dreidimensionale Messung, wobei auch bei dieser nachfolgenden Messung die die entsprechenden Messpunkte beschreibenden 3D-Daten als eine zugehörige zweite oder weitere Datenmenge gespeichert und optional ebenfalls mit einem Zeitstempel versehen werden. Die mindestens eine weitere dreidimensionale Messung ist hier zu verstehen als "jede weitere" Messung im Sinne jeder sich wiederholenden nachfolgenden Messung (zweite oder weitere Datenmenge) zu einer vorlaufenden Messung (erste Datenmenge).

Die 3D-Daten repräsentieren dabei auch sogenannte Tiefendaten (*depth data*), nämlich die "Tiefen" oder besser gesagt, die Abstände der entsprechenden Messpunkte vom Sensor. Auf diese Weise kann man die Abstände jeder detektierten Fläche eines Objekts und damit ihre Position erkennen. Eine Wiederholung der Messung erlaubt es, die Veränderung dieser Daten festzustellen.

Ausgehend von der Überlegung, dass durch die Messung mithilfe eines tiefenempfindlichen Sensors nicht nur der Abstand eines jeden zu einem Körper oder Ladungsteil gehörigen Messpunkts zum Sensor bekannt ist, sondern damit auch die Abstände einzelner Messpunkte untereinander, und ausgehend davon, dass eine kleine räumliche Veränderung eines Messpunkts auch eine, wenn auch minimale Veränderung des zugehörigen 3D-Datums beim Vergleich zweier aufeinanderfolgenden Datenmengen erzeugt, findet sich der dem erfindungsgemäßen Verfahren zugrunde liegende Gedanke darin, dass durch eine zunächst leicht detektierbare "einzelne" Veränderung weitere umfassendere Verarbeitungs- bzw. Verfahrensschritte dann ausgelöst werden, wenn Einzelveränderungen auffällig wurden. Solche "einzelnen" Veränderungen werden entweder im dritten oder im vierten Verfahrensschritt sehr schnell und präzise detektiert.

Der Veränderung einzelner 3D-Daten wird also eine Art Indikatorfunktion für eventuell zu erwartende gravierendere Veränderungen zugeordnet. Dies ist insbesondere dann erfolgreich, wenn eine Veränderung einzelner, besonders auffälliger und prominenter 3D-Daten erkennbar ist, beispielsweise solche, die zu Grenz- oder Eckbereichen eines Ladungsteils gehören.

Treten solche Veränderungen auf, wird mittels weiterer Verarbeitungsschritte dann geprüft, ob das einzelne 3D-Datum bzw. die Anzahl von veränderten 3D-Daten zu solchen 3D-Daten gehört, die ein Ladungsteil oder einen Körper (ein Volumen) beschreiben. Mit Hilfe der Indizierung, optional auch unter Berücksichtigung eines Zeitstempels, wird weiterhin ermittelt, ob, in welche Richtung und mit welcher Geschwindigkeit sich das Ladungsteil oder der Körper (das Volumen) bewegt hat, zu dem dieses einzelne 3D-Datum bzw. die Anzahl von veränderten 3D-Daten gehört.

Die erfindungsgemäße Verfahrensweise führt zu einer sehr schnellen und sicheren Detektion von Veränderungen der Ladungsteile bzw. Volumina, wobei in einer vorteilhaften Weiterbildung auch und insbesondere die Tiefe, Höhe und Breite der bewegten Ladungsteile bzw. Volumina ermittelt und als 3D-Datencluster, also als Teilmenge der jeweiligen Datenmenge gespeichert werden. Ein solches Verfahren der dreidimensionalen Auswertung lässt die alte und die neue Position des Ladungsteils deutlich erkennbar werden, damit ebenso die Bewegungsrichtung und den Bewegungstyp.

Die Messungen mit dem abstandsmessenden, tiefenempfindlichen Sensor können dabei periodisch erfolgen, was in Hinblick auf eine kontinuierliche Zustandsermittlung vorteilhaft ist, sie können aber auch in unregelmäßigen Zeitabständen oder je nach Bedarf erfolgen.

Eine weitere vorteilhafte Ausbildung besteht darin, dass im dritten Schritt die 3D-Daten in der Form erfasst werden, dass einerseits 2D-Daten eines durch einen Sensor oder eine Kamera erfassten 2D-Bildes ermittelt werden und andererseits zu jedem Bildpunkt (Pixel) des 2D-Bildes eine Distanzinformation/ein Abstand ermittelt wird. Dabei werden im dritten Schritt lediglich die 2D-Daten der einzelnen, örtlich korrespondierenden Messpunkte der ersten und der weiteren Messung oder Messungen mittels eines in der Rechen- und/oder Auswerteeinheit programmierten Algorithmus miteinander verglichen und in dem Fall, dass Änderungen der 2D-Daten von sich örtlich entsprechenden Messpunkten der ersten und der weiteren Datenmenge detektiert werden, insbesondere in dem Fall, dass eine einen vorgegebenen Schwellenwert überschreitende Anzahl von Änderungen detektiert wird, die weiteren Verfahrensschritte unter Einbindung der Distanzinformation oder der 3D-Daten für jeden Messpunkt ausgeführt werden.

Eine solche, zunächst lediglich auf 2D-Daten reduzierte Auswertung stellt eine vereinfachte und dementsprechend mit einer vereinfachten Software durchzuführende erste Prüfung dar, mit der festgestellt werden kann, ob bei einer zweidimensionalen Betrachtung bereits Veränderungen der 2D-Daten vorhanden sind. Bejahendenfalls erfolgen die weiteren Verfahrensschritte dann wieder unter Nutzung der 3D-Daten.

Bei dieser Ausbildung werden im dritten Schritt die Pixel einer zweidimensionalen Darstellung der einzelnen, örtlich korrespondierenden Messpunkte der ersten und der weiteren Messung oder Messungen mittels eines in der Rechen- und/oder Auswerteeinheit programmierten Algorithmus miteinander verglichen und in dem Fall, dass eine einen vorgegebenen Schwellenwert überschreitende Anzahl von Änderungen der Pixel von sich örtlich entsprechenden Messpunkten der ersten und der weiteren Datenmenge oder einer der weiteren Datenmengen detektiert wird, die weiteren Schritte ausgeführt.

Auch dadurch reduziert man die zu verarbeitenden Datenmengen für den ersten Schritt der Detektion nach dem erfindungsgemäßen Verfahren dahingehend, dass lediglich Pixel, also Bildpunkte einer zweidimensionalen Darstellung der Messwerte, miteinander verglichen werden. Auch hier ist eine Indikatorfunktion gegeben, die die weiteren Verfahrensschritte zur genauen Bestimmung der Bewegung auslöst.

Eine weitere vorteilhafte Ausbildung besteht darin, dass die Änderung der 3D-Daten im Vergleich zu den vorlaufenden Messungen auf eine sich mit gleichen oder wechselnden Vorzeichen in räumlicher x-, y-, oder z-Richtung verändernde Positionierung eines Körpers oder Ladungsteils geprüft wird. Insbesondere im Zusammenwirken mit einer weiteren vorteilhaften Ausbildung, bei der die Änderung der 3D-Daten im Vergleich zu den vorlaufenden Messungen auf eine räumliche Veränderung eines einen indizierten dreidimensionalen Körper oder Ladungsteil kennzeichnenden 3D-Datenclusters geprüft wird, ergibt sich eine hochdynamische und reichhaltige Interpretationsmöglichkeit der erhaltenen Daten.

Mit einer solchen Richtungsbestimmung und Identifizierung durch Erkennen der Cluster-Indizierung ist das erfindungsgemäßen Verfahrens in der Lage, festzustellen, ob ein Schwanken oder Wackeln von Ladungsteilen bemerkbar ist und ob in einem weiterführenden Vergleich der zugehörigen indizierten Datencluster dieses Schwanken dazu geführt hat, dass etwa ein Ladungsteil komplett seine Position verändert hat, beispielsweise von einem Stapel heruntergefallen ist. Das erfindungsgemäße Verfahren ist somit in der Lage, nicht nur ein Schwanken oder Wackeln der Ladung festzustellen, sondern auch eine nachfolgende Positionsveränderung eines Körpers oder Ladungsteils, etwa ein Fallen oder Rutschen innerhalb des Laderaums. Das alles ist durch das erfindungsgemäße Verfahren nahezu in Echtzeit möglich.

Dadurch kann also sehr präzise und in Echtzeit festgestellt werden, ob ein bereits vorher identifiziertes Ladungsteil oder ein bereits vorher identifizierter Körper sich bewegt hat, also etwa verrutscht ist. Darüber hinaus sind auch bereits sehr kleine Bewegungen der Ladung detektierbar, sodass schnell eine Aussage über einen Sicherungszustand der Ladung getroffen werden kann. Sollte bei hochgestapeltem Ladungsgut ein Ladungsteil von einem Stapel fallen, kann mit dem erfindungsgemäßen Verfahren auch festgestellt werden, aus welcher Höhe das Ladungsteil gefallen ist und in welcher Lage es sich nach dem Sturz befindet.

Das weiterverarbeitbare Signal kann genutzt werden, um Warnhinweise für den Fahrer zu erzeugen, um Signale für eine weiterverarbeitende Steuerungseinheit zu erzeugen oder um daraus Daten für eine visuelle Darstellung des Laderaums, der örtlichen Zuordnung der Körper oder Ladungsteile im Laderaum und des aktuellen Beladungszustands zu erzeugen, insbesondere zur Darstellung auf einem Monitor oder einem Anzeigegerät, insbesondere als ein dreidimensionales Ladungsbild.

Das bereitgestellte weiter verarbeitbare Signal kann dabei auch sämtliche aus den 3D-Daten berechneten Parameter enthalten, etwa die, die jeweils Position und Abmessungen von Körpern oder Ladungsteilen beschreiben.

Die 3D-Daten können als Grundlage für weitere Modellrechnungen oder auch für die Erzeugung von Videodaten genutzt werden, die dann auf einem Monitor darstellbar sind und ein dreidimensionales Bild ergeben, welches den aktuellen Ladungszustand darstellt. Die Daten oder deren Aufarbeitung können über Kommunikationseinrichtungen etwa an die Zentrale einer Spedition gesendet werden oder auch an Behörden, deren Aufgabe es ist, die Ladung zu kontrollieren.

Um eine direkte Relation zu einem beobachteten Laderaum zu schaffen, kann der Algorithmus so ausgelegt sein, dass auch die 3D-Daten der Begrenzungsflächen des Laderaums, also Boden, Seitenwände und Decke, ebenfalls in identifizierbaren 3D-Datenclustern gespeichert und somit für alle weiteren Messungen bekannt und "gesetzt" sind. Diese Information wird dann genutzt, um auf einfache Weise zwischen 3D-Daten, die den Laderaum als solchen beschreiben, und 3D-Daten, die die Ladungsteile oder Körper beschreiben, zu unterscheiden.

In vorteilhafter Weise wird der Nullpunkt des Koordinatensystems in eine dem Sensor gegenüberliegende Ecke des Laderaumes gesetzt. Der Sensor ist dazu vorteilhaft an einer Wand oder Begrenzung eines Laderaums angeordnet und so auf die gegenüberliegende Wand gerichtet, dass der Messbereich des Sensors den gesamten Laderaum umfasst, wobei der Nullpunkt der dreidimensionalen Messungen in eine Ecke des Laderaums kalibriert wird. Es kann auch jeder andere Punkt als Nullpunkt des Koordinatensystems verwendet werden. Bei einer solche Sensoranordnung befindet sich dann der gesamte Laderaum bis zur Vorderwand im Messbereich.

Nach dem erfindungsgemäßen Verfahren kann auch festgestellt werden, ob ein Körper oder Ladungsteil im Laderaum hinzugefügt wurde, entfernt wurde oder von seinem ursprünglichen Platz an einen anderen Platz im Laderaum gebracht wurde. Hierzu brauchen lediglich die 3D-Datenmengen und 3D-Datencluster einer vor dem Ereignis (Körper oder Ladungsteil hinzufügen) ermittelten 3D-Datenmenge mit einer Datenmenge verglichen werden, die nach dem Ereignis vermessene 3D-Daten beinhaltet. Neue Körper oder Ladungsteile, die innerhalb des Laderaums zugefügt wurden, erhalten dann wiederum ihre zugehörigen bei weiteren Messungen identifizierbaren 3D-Datencluster.

Eine weitere vorteilhafte Ausbildung besteht darin, dass der Sensor als optischer Tiefen-Sensor ausgebildet ist, insbesondere als Time-of-Flight-Kamera (TOF-Kamera) oder Stereokamera. Eine TOF-Kamera liefert beispielsweise für jeden Bildpunkt die Entfernung des darauf abgebildeten Körpers. Dabei kann eine ganze Szene auf einmal aufgenommen werden, ohne dass einzeln abgetastet werden muss. Das führt natürlich zu einer schnelleren Verarbeitung der entsprechenden Signale. Es ist je nach Anwendung ebenfalls vorteilhaft, wenn der Sensor als LiDAR-Sensor (*light imaging, detection and ranging*) oder Laser-Scanner (*light amplification by stimulated emission of radiation*) ausgebildet ist, der für eine gerasterte Abtastung eine preiswertere Alternative darstellt. Diese Systeme als solche sind bekannt.

Eine weitere vorteilhafte Ausbildung besteht darin, dass die Vertrauensstärke und Vollständigkeit der geänderten 3D-Daten der zweiten Datenmenge überprüft wird, und/oder ein Schwellenwert für ein Rauschen bei der Messung festgelegt wird.

Das kann beispielsweise dadurch erfolgen, dass der zeitliche Änderungsverlauf der die Abstände von Messpunkten oder Messpunktmengen kennzeichnenden Messwerte ausgewertet wird. Aus der zeitlichen Historie kann anhand von Grenzwerten oder Vorkommnissen/Auftreten ermittelt werden, ob zum Beispiel ein erwarteter Messwert, also das Auftreten eines durch 3D-Daten beschriebenen Messpunktes in einem bestimmten Erwartungsbereich, d.h. in einer bestimmten Entfernung, etwa erst nach Überschreitung einer Zeit-Schwelle erfolgt oder nur für einen kurzen Zeitraum auftritt und dann wieder verschwindet, also nicht stabil verbleibt.

Durch die beschriebene dreidimensionale Messung ist also jeweils der augenblicklich ermittelte Zustand und der bei der vorlaufenden Messung ermittelte frühere Zustand bekannt und somit auch die Parameter der entsprechenden Körper oder Ladungsteile, nämlich ihre Tiefe (Abstand vom Sensor), ihre Breite, ihre Höhe, ihre Position und ihr Volumen.

Indem man die aktuell ermittelten 3D-Daten eines 3D-Datenclusters mit den bereits existierenden 3D-Datencluster-Informationen vergleicht und zusätzliche Prüfungen dahingehend durchführt, ob etwa die 3D-Daten eine Mindestqualität oder -stabilität haben, oder ob sie etwa nicht ausreichend oft in einem Erwartungsbereich auftauchen, erkennt man auch, ob der Sensor nicht in der Lage war, bestimmte Bereiche zu vermessen. Gleichermaßen kann man damit die 3D-Daten der Umgebung der jeweiligen Messpunkte analysieren und mit den vorlaufenden Daten vergleichen.

Eine weitere vorteilhafte Ausbildung besteht darin, dass eine visuelle Darstellung des Laderaums, der örtlichen Zuordnung der Körper oder Ladungsteile im Laderaum und des aktuellen Beladungszustands in Form eines dreidimensionalen Ladungsbildes auf einem Monitor dargestellt werden. Eine entsprechende rechnerische Aufarbeitung der 3D-Daten liefert dann einfach zu interpretierende Bilder auf einem Monitor, die eine sehr schnelle und intuitive Beurteilung durch eine die Ladung kontrollierende Person erlauben.

Eine weitere vorteilhafte Ausbildung besteht darin, dass die periodische Messung der 3D-Daten eines jeden Messpunktes mit einer Frequenz von 1Hz bis 5 Hz erfolgt. Eine solche periodische Überprüfung ist ausreichend dynamisch, um bei der Anwendung des erfindungsgemäßen Verfahrens eine für die Überwachung eines LKW-Laderaums ausreichende Genauigkeit und eine definierte Bestimmung von Bewegungen eines Ladungsteils zu erreichen.

Sinnvollerweise kann aus den 3D-Daten, welche die Parameter, d.h. die Breite, Höhe und Tiefe jedes einzelnen im Laderaum befindlichen Körpers oder Ladungsteils beschreiben, der Flächenbedarf und/oder die Volumina der Körper oder Ladungsteile ermittelt und ins Verhältnis zur vorhandenen Laderaumfläche oder zum vorhandenen Volumen des Laderaums gesetzt werden. Dann lässt sich z.B. aus der Summe aller berechneten Volumina aller Körper und/oder Ladungsteile das belegte Gesamtvolumen berechnen und somit auch das noch freie Volumen im Laderaum bestimmen. Dasselbe gilt für die Berechnung der von allen Körpern und/oder Ladungsteilen belegten Gesamtflächen im Verhältnis zu der noch freien, nicht belegten Fläche. Die Relevanz solcher Bestimmungen für die Ladungsplanung von z.B. Flottenbetreibern oder Speditionen ist sofort einzusehen.

Eine weitere vorteilhafte Ausbildung besteht darin, dass das weiterverarbeitbare Signal zur Speicherung in Datenverarbeitungssystemen, insbesondere zur Nutzung in Steuerungseinrichtungen und zur Verwendung und Verarbeitung innerhalb eines Daten-Kommunikationssystems bereitgestellt wird. So können über eventuell verbundene, in dem zum Laderaum gehörigen Fahrzeug vorhandene weitere Funkeinrichtungen diese Signale auch an die Zentrale einer Spedition oder eines Flottenbetreibers gesendet werden.

Darüber hinaus ist eine Einrichtung offenbart, welche zur Überwachung eines Laderaums und zur Durchführung des erfindungsgemäßen Verfahrens geeignet ist. Dabei weist die Einrichtung mindestens einen abstandsmessenden, tiefenempfindlichen Sensor zur wiederholten dreidimensionalen Messung des Laderaumes auf, sowie eine Rechen- und/oder Auswerteeinheit mit einem programmierten Algorithmus auf. Mittels der so vorgesehenen Rechen- und/oder Auswerteeinheit und des Algorithmus werden die 3D-Daten eines jeden Messpunkts etwaiger im Laderaum befindlicher Körper oder Ladungsteile durch wiederholte Messung ermittelt, als Datenmengen (3D-Punktwolken) gespeichert und nach dem erfindungsgemäßen Verfahren miteinander verglichen. Bei ermittelten Änderungen wird ein verarbeitbares Signal bereitgestellt. Der Vorteil dabei liegt in der Verwendbarkeit/Bereitstellung einer solchen Einrichtung für beliebige Laderäume, also zum Beispiel für Laderäume von LKW, aber auch für Lade-Container von Schiffen oder anderen Fahrzeugen.

Das erfindungsgemäße Verfahren und die dazu besonders geeignete Einrichtung ist in besonderer Weise für ein Fahrzeug mit einem Laderaum geeignet, beispielsweise für einen Lastkraftwagen oder einen Wagenzug. Auch die Anwendung bei Containern, die in verschiedenen Fahrzeugen transportiert werden, ist sehr gut möglich. Dabei weisen das jeweilige Fahrzeug bzw. der Container einen Laderaum auf, der mit mindestens einem im Inneren des Laderaumes vorgesehenen, abstandsmessenden tiefenempfindlichen Sensor zur dreidimensionalen Messung versehen ist, wobei das Fahrzeug weiterhin eine Rechen- und/oder Auswerteeinheit mit einem programmierten Algorithmus aufweist, mit dem die vom Sensor erfassten 3D-Daten eines jeden Messpunktes in einer ersten Datenmenge (3D-Punktwolke) gespeichert, nach dem erfindungsgemäßen Verfahren verarbeitet und mit mindestens einer weiteren Datenmenge verglichen werden.

Anhand eines Ausführungsbeispiels soll die Erfindung näher erläutert werden. Es zeigen
- Fig. 1: skizzenhaft eine Monitor-Darstellung eines Laderaums, die auf erfassten 3D-Daten beruht, welche für eine Darstellung eines dreidimensionalen Ladungsbildes rechnerisch aufgearbeitet wurden,
- Fig. 2: eine Darstellung gemäß Fig.1, dort jedoch eine Situation, in der ein Ladungsteil gekippt und aus seiner Ursprungsposition verschoben ist,
- Fig. 3, 4: eine zweidimensionale, einfache Monitordarstellung des Ergebnisses des dritten Schrittes des erfindungsgemäßen Verfahrens,
- Fig. 5, 6: eine vergrößerte Ansicht der in Fig. 3 und 4 dargestellten Details in ihrer Gesamtumgebung,
- Fig. 7: das für eine Monitordarstellung aufbereitete Ergebnis der weiteren erfinderischen Verfahrensschritte, in denen die erste und die weitere Datenmenge oder die weiteren Datenmengen (3D-Punktwolke) mittels eines Algorithmus daraufhin geprüft werden, ob Teilmengen der darin enthaltenen 3D-Daten einen dreidimensionalen Körper oder ein Ladungsteil beschreiben oder kennzeichnen.

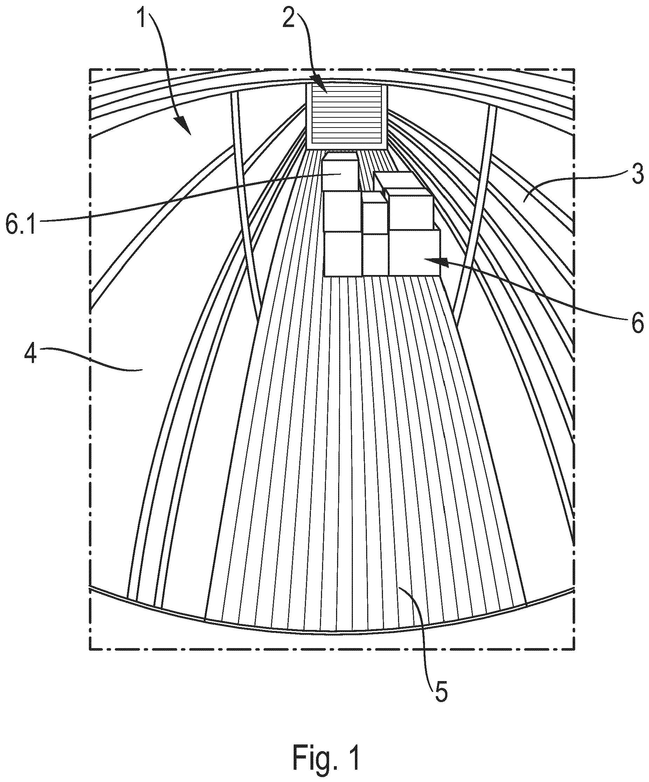

Fig. 1 zeigt skizzenhaft eine Monitor-Darstellung, bei der mit Hilfe des erfindungsgemäßen Verfahrens ein Laderaum mit mindestens einem abstandsmessenden, tiefenempfindlichen Sensor dreidimensional vermessen wurde und die aktuellen Abstände von Messpunkten oder Messpunktmengen etwaiger im Laderaum befindlicher Körper oder Ladungsteile vom Sensor als Messwerte in Form von 3D-Daten erfasst und für eine möglichst realistische Darstellung des Beladungszustands in Form eines dreidimensionalen Ladungsbildes auf einem Monitor rechnerisch aufgearbeitet wurden. Eine solche Aufarbeitung der 3D-Daten liefert dann das einfach zu interpretierende Bild gemäß Fig. 1 auf einem Monitor.

Ein abstandsmessender TOF-Sensor, hier nicht näher dargestellt, befindet sich in einer oberen Ecke der hinteren Ladebordwand des Laderaums 1. Dieser Ort ist besonders gut geeignet für die Anordnung eines solchen Sensors, da der gesamte Laderaum bis zur Vorderwand sich dann im Messbereich des Sensors befindet und der Messbereich auch nicht durch vorgestellte Körper oder Ladungsteile behindert wird, solange natürlich ein fachgerechtes Verstauen der Ladung immer bis in die Tiefe des Laderaumes erfolgt.

Fig. 1 zeigt danach einen Blick in das Innere eines Laderaums 1, nämlich von seiner hinteren Ladebordwand aus in Blickrichtung auf seine vordere Begrenzungswand. Man erkennt die rechte Begrenzungswand 3, die linke Begrenzungswand 4, die Ladefläche bzw. den Boden 5 und die vordere Begrenzungswand 2. Ebenfalls erkennbar sind verschiedene Objekte, nämlich verschiedene auf dem Laderaumboden 5 befindliche Ladungsteile 6. Es handelt sich hier um den Laderaum eines LKW, dessen Ladefläche mit einem Gerüst aus Streben und Latten versehen ist, welches mit einer Plane überdeckt ist.

Fig.1 zeigt dabei eine Ausgangssituation, in der das Ladungsteil 6.1 sich in seiner ursprünglichen Position befindet, nämlich in der Position, in der es verladen wurde.

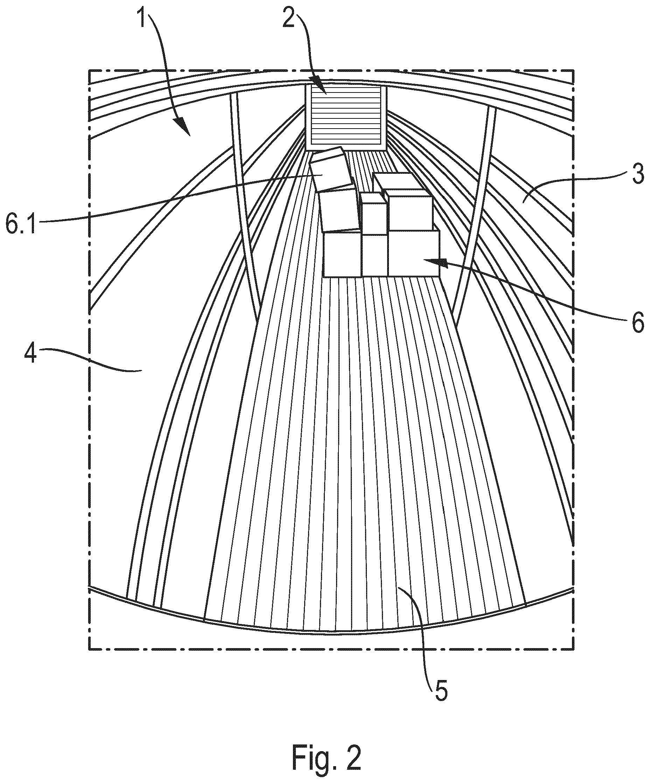

Demgegenüber zeigt Fig. 2 eine Situation, in der das Ladungsteil 6.1 gekippt und aus seiner Ursprungsposition verschoben ist. Ansonsten entsprechen Darstellung und Datenaufarbeitung in Fig.2 denjenigen in Fig.1.

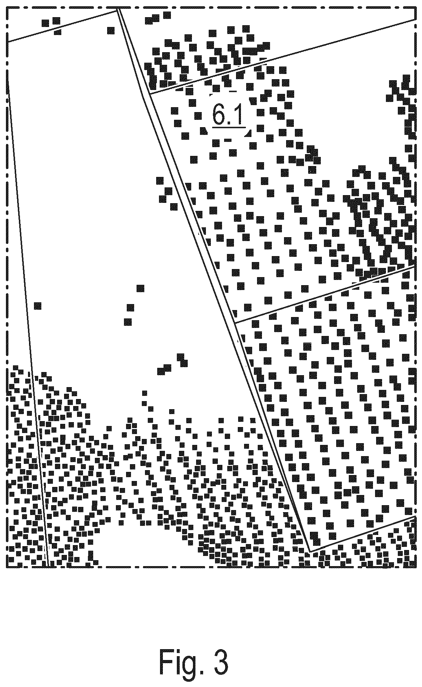

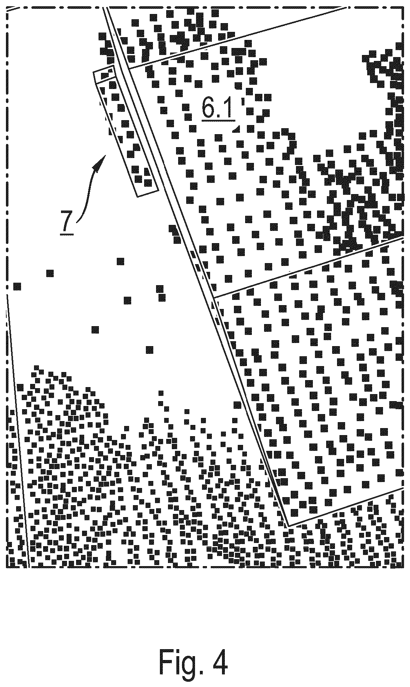

Fig. 3 zeigt nun in einer anderen und lediglich zweidimensionalen einfacheren Monitordarstellung das Ergebnis des dritten Schrittes des erfindungsgemäßen Verfahrens, bei dem Pixel, nämlich 2D-Daten der einzelnen, örtlich korrespondierenden Messpunkte der ersten und der weiteren Messungen mittels eines in der Rechen- und/oder Auswerteeinheit programmierten Algorithmus miteinander verglichen wurden. Fig. 3 und 4 stellen jeweils vergrößerte Ausschnitte des Gesamtbildes der Fig.1 und 2 dar, dazu in einer nach links geneigten Darstellung.

Betrachtet man die Darstellungen der Fig.4 im Vergleich zur Darstellung in Fig.3, so erkennt man, dass in Fig.4 eine Anzahl von Änderungen der Pixel bzw. 2D-Daten von sich räumlich entsprechenden Messpunkten der ersten und der weiteren Datenmenge detektiert wurde, nämlich eine Veränderung einzelner, besonders auffälliger und prominenter 2D-Daten 7, die zum Grenz- oder Eckbereich des Ladungsteils 6.1 gehören.

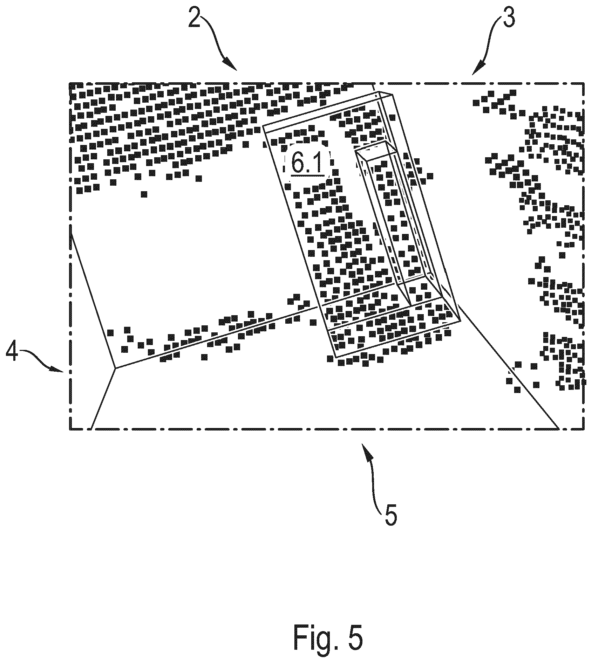

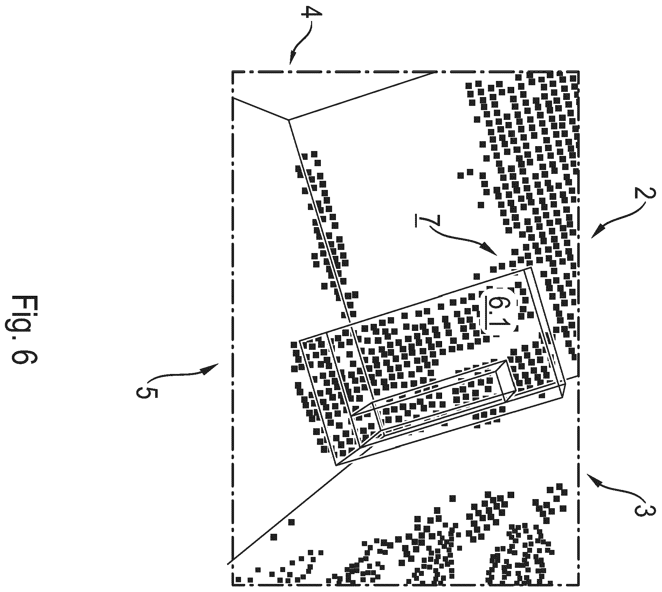

Fig. 5 und 6 zeigen noch einmal eine etwas vergrößerte Ansicht der in Fig. 3 und 4 dargestellten Details in ihrer Gesamtumgebung, wobei hier ebenfalls eine nach links geneigte Darstellung des Laderaums vorhanden ist. In den Fig. 5 und 6 sind auch aus den übrigen ermittelten Daten berechnete Hilfslinien eingefügt, die die Laderaumwände 2, 3, 4 und den Laderaumboden 5 erkennbar werden lassen.

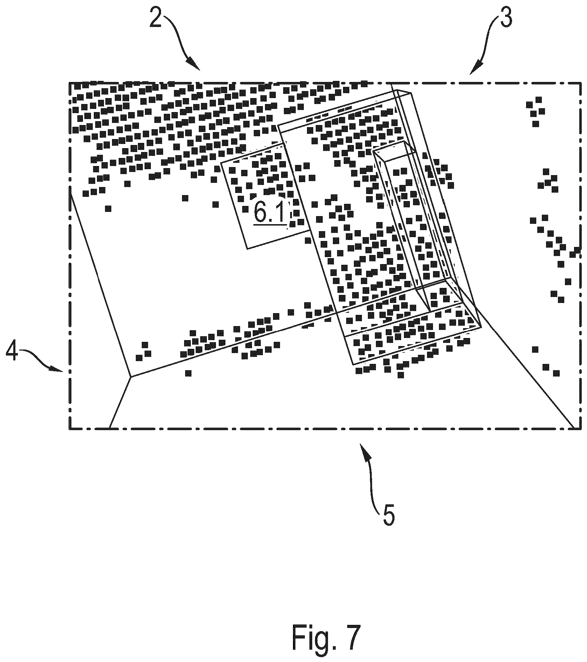

Fig. 7 zeigt letztlich das für eine Monitordarstellung aufbereitete Ergebnis, wonach die weiteren erfinderischen Verfahrensschritte ausgelöst werden. Die Detektion der Veränderungen von einzelnen Daten führt dann dazu, dass die erste und die weiteren Datenmengen (3D-Punktwolke) mittels eines Algorithmus im vierten Verfahrensschritt daraufhin geprüft werden, ob Teilmengen der darin enthaltenen 3D-Daten einen dreidimensionalen Körper oder ein Ladungsteil beschreiben oder kennzeichnen.

Dies trifft hier für das Ladungsteil 6.1 zu, sodass die 3D-Daten des Ladungsteils 6.1 als ein dieses dreidimensionale Ladungsteil kennzeichnendes 3D-Datencluster (Teilmenge) gespeichert, indiziert und ebenfalls mit einem Zeitstempel versehen wurden. Im weiteren verfahrensgemäßen Schritt, nämlich im fünften Schritt, werden dann die 3D-Datencluster der nacheinander folgenden unterschiedlichen Messungen miteinander verglichen, wonach räumliche Änderungen des Ladungsteils innerhalb eines Zeitintervalls detektiert wurden und von der Rechen- und/oder Auswerteeinheit ein diese Änderungen beschreibendes und weiterverarbeitbares Signal bereitgestellt wurde. In diesem Fall ist das Signal ein Warnsignal dahingehend, dass nach einem ersten Schwanken der Ladung bzw. des Ladungsteils 6.1 letztlich festgestellt wurde, dass das Ladungsteil von seinem Stapel herunterfällt bzw. heruntergefallen ist.

### Bezugszeichenliste (Teil der Beschreibung)

- 1: Laderaum
- 2: vordere Wand des Laderaums
- 3: rechte Begrenzungswand des Laderaums
- 4: linke Begrenzungswand des Laderaums
- 5: Laderaumboden
- 6: Ladungsteile, Gesamtheit der Ladung
- 6.1: einzelnes Ladungsteil
- 7: Veränderung einzelner auffälliger 3D-Daten

## Patentansprüche

1. Computerimplementiertes Verfahren zur Erfassung von sich bewegenden Körpern oder Ladungsteilen im Inneren eines Laderaums, wobei der Laderaum (1) mit mindestens einem abstandsmessenden, tiefenempfindlichen Sensor dreidimensional vermessen wird und die aktuellen Abstände von Messpunkten oder Messpunktmengen etwaiger im Laderaum befindlicher Körper oder Ladungsteile (6, 6.1) vom Sensor als Messwerte in Form von 3D-Daten erfasst werden,
- wobei in einem ersten Schritt in einer ersten Messung die einen jeden Messpunkt etwaiger im Laderaum befindlicher Körper oder Ladungsteile (6, 6.1) beschreibenden 3D-Daten als eine erste Datenmenge (3D-Punktwolke) in einer Rechen- und/oder Auswerteeinheit gespeichert und optional mit einem Zeitstempel versehen werden,
- wobei in einem zweiten Schritt mindestens eine weitere, nachfolgende dreidimensionale Messung durchgeführt und die die entsprechenden Messpunkte beschreibenden 3D-Daten der im Laderaum befindlichen Körper oder Ladungsteile (6, 6.1) in der Rechen- und/oder Auswerteeinheit als weitere Datenmengen gespeichert und optional ebenfalls mit einem Zeitstempel versehen werden,
- wobei entweder in einem dritten Schritt 3D-Daten der einzelnen, örtlich korrespondierenden Messpunkte der ersten und der weiteren Messung oder Messungen mittels eines in der Rechen- und/oder Auswerteeinheit programmierten Algorithmus miteinander verglichen werden und in dem Fall, dass Änderungen der 3D-Daten von sich räumlich entsprechenden Messpunkten der ersten und der weiteren Datenmenge detektiert werden, der vierte Schritt und die folgenden weiteren Schritte ausgeführt werden, **dadurch gekennzeichnet, dass**
- ohne vorherige Durchführung des dritten Schritts in einem vierten Schritt die erste und die weitere Datenmenge/die weiteren Datenmengen (3D-Punktwolke/3D-Punktwolken) mittels eines in der Rechen- und/oder Auswerteeinheit programmierten Algorithmus daraufhin geprüft werden, ob Teilmengen der darin enthaltenen 3D-Daten einen dreidimensionalen Körper oder ein Ladungsteil (6.1) kennzeichnen und zutreffendenfalls als ein einen dreidimensionalen Körper oder Ladungsteil (Volumen) kennzeichnendes 3D-Datencluster gespeichert, indiziert und optional ebenfalls mit einem Zeitstempel versehen werden,
- wobei in einem fünften Schritt die 3D-Datencluster der ersten und weiteren Datenmengen, welche aus örtlich korrespondierenden Messpunkten oder Messpunktmengen ermittelte dreidimensionale Körper oder Ladungsteile kennzeichnen, mittels des Algorithmus in der Rechen- und/oder Auswerteeinheit miteinander verglichen werden,
wobei für den Fall, dass bei dem Vergleich der 3D-Datencluster für örtlich korrespondierende dreidimensionale Körper oder Ladungsteile der ersten und weiteren Datenmenge/weiteren Datenmengen Änderungen der 3D-Datencluster ermittelt werden, die räumliche Änderungen der örtlich korrespondierenden dreidimensionalen Körper oder Ladungsteile innerhalb eines Zeitintervalls kennzeichnen, von der Rechen- und/oder Auswerteeinheit ein diese Änderungen beschreibendes und weiter verarbeitbares Signal bereitgestellt wird.

2. Verfahren nach Anspruch 1, bei dem im dritten Schritt die 3D-Daten der ersten und der weiteren Messung/weiteren Messungen miteinander verglichen werden und in dem Fall, dass eine einen vorgegebenen Schwellenwert überschreitende Anzahl von Änderungen (7) der 3D-Daten detektiert wird, die gemäß Anspruch 1 auf den dritten Schritt folgenden Schritte ausgeführt werden.

3. Verfahren nach Anspruch 1 oder 2, bei dem das Innere des Laderaumes (1) periodisch dreidimensional vermessen wird.

4. Verfahren nach einem der Ansprüche 1 bis 3, bei dem bereits während des ersten und zweiten Schrittes der dreidimensionalen Vermessung der im Laderaum befindlichen Körper oder Ladungsteile deren Parameter insbesondere in Hinblick auf ihre Position und jeweils ihre Breite, Höhe und Tiefe als 3D-Datencluster gespeichert und optional indiziert und/oder mit einem Zeitstempel versehen werden.

5. Verfahren nach einem der Ansprüche 1 bis 4, bei dem die 3D-Daten in der Form erfasst werden, dass einerseits 2D-Daten eines durch einen Sensor oder eine Kamera erfassten 2D-Bildes ermittelt werden und andererseits zu jedem Bildpunkt (Pixel) des 2D-Bildes eine Distanzinformation ermittelt wird, wobei im dritten Schritt lediglich die 2D-Daten der einzelnen, örtlich korrespondierenden Messpunkte der ersten und der weiteren Messung/weiteren Messungen mittels eines in der Rechen- und/oder Auswerteeinheit programmierten Algorithmus miteinander verglichen werden und in dem Fall, dass Änderungen der 2D-Daten von sich örtlich entsprechenden Messpunkten der ersten und der weiteren Datenmenge/weiteren Datenmenge detektiert werden, die weiteren Verfahrensschritte unter Einbindung der Distanzinformation oder der 3D-Daten für jeden Messpunkt ausgeführt werden.

6. Verfahren nach einem der Ansprüche 1 bis 5, bei dem die Änderung der 3D-Daten im Vergleich zu den vorlaufenden Messungen auf eine sich mit gleichen oder wechselnden Vorzeichen in räumlicher x-, y-, oder z-Richtung verändernde Positionierung eines Körpers oder Ladungsteils geprüft wird.

7. Verfahren nach einem der Ansprüche 1 bis 6, bei dem die Änderung der 3D-Daten im Vergleich zu den vorlaufenden Messungen auf eine räumliche Veränderung eines einen indizierten dreidimensionalen Körper oder Ladungsteil kennzeichnenden 3D-Datenclusters geprüft wird.

8. Verfahren nach einem der Ansprüche 1 bis 7, bei dem der Sensor als optischer Tiefen-Sensor ausgebildet ist, insbesondere als Time-of-Flight-Kamera oder Stereokamera.

9. Verfahren nach einem der Ansprüche 1 bis 8, bei dem der Sensor als LiDAR-Sensor oder Laser-Scanner ausgebildet ist.

10. Verfahren nach einem der Ansprüche 1 bis 9 zur Überwachung eines zu einem Fahrzeug gehörigen Laderaums, bei dem der Sensor an einer Wand oder Begrenzung eines Laderaums angeordnet und der Messbereich des Sensors den gesamten Laderaum umfasst.

11. Verfahren nach einem der Ansprüche 1 bis 10, bei dem die Vertrauensstärke und Vollständigkeit der geänderten 3D-Daten der weiteren Datenmenge oder einer der weiteren Datenmengen überprüft wird und/oder ein Schwellenwert für ein Rauschen bei der Messung oder Klassifizierung festgelegt wird.

12. Verfahren nach einem der Ansprüche 1 bis 11, bei dem eine visuelle Darstellung des Laderaums, der örtlichen Zuordnung der Körper oder Ladungsteile im Laderaum und des aktuellen Beladungszustands in Form eines dreidimensionalen Ladungsbildes auf einem Monitor dargestellt wird.

13. Verfahren nach einem der Ansprüche 2 bis 12, bei dem die periodische Messung der 3D-Daten eines jeden Messpunktes mit einer Frequenz von 1 bis 5 Hz erfolgt.

14. Verfahren nach einem der Ansprüche 1 bis 13, bei dem das weiter verarbeitbare Signal zur Speicherung in Datenverarbeitungssystemen, insbesondere zur Nutzung in Steuerungseinrichtungen und zur Verwendung und Verarbeitung innerhalb eines Daten-Kommunikationssystems bereitgestellt wird.

15. Einrichtung zur Überwachung eines Laderaums zur Durchführung des Verfahrens nach Anspruch 1 bis 14, wobei die Einrichtung mindestens einen abstandsmessenden, tiefenempfindlichen Sensor zur wiederholten, dreidimensionalen Vermessung des Laderaumes aufweist sowie eine Rechen- und/oder Auswerteeinheit mit einem programmierten Algorithmus, wobei mittels der Rechen- und/oder Auswerteeinheit und des Algorithmus die einen jeden Messpunktes etwaiger im Laderaum befindlicher Körper oder Ladungsteile (6, 7, 8, 11) beschreibenden 3D-Daten jeder durch wiederholte Messung erhaltenen Datenmenge mit einem Verfahren gemäß Anspruch 1 bis 14 miteinander verglichen werden und bei ermittelten Änderungen ein verarbeitbares Signal bereitgestellt wird.

16. Fahrzeug mit einem Laderaum, insbesondere Lastkraftwagen oder Wagenzug, wobei das Fahrzeug eine Einrichtung zur Überwachung eines Laderaumes nach Anspruch 15 aufweist.

## Claims

1. Computer-implemented method for detecting moving bodies or pieces of cargo inside a cargo space, wherein the cargo space (1) is measured three-dimensionally using at least one distance-measuring, depth-sensitive sensor, and the current distances of measuring points or measuring point sets of any bodies or pieces of cargo (6, 6.1) located in the cargo space are detected by the sensor as measured values in the form of 3D data,
- wherein, in a first step, in a first measurement, the 3D data describing each measuring point of any bodies or pieces of cargo (6, 6.1) located in the cargo space are stored as a first data set (3D point cloud) in a computing and/or evaluation unit and optionally provided with a time stamp,
- wherein, in a second step, at least one further, subsequent three-dimensional measurement is executed, and the 3D data describing the corresponding measuring points of the bodies or pieces of cargo (6, 6.1) located in the cargo space are stored in the computing and/or evaluation unit as further data sets and optionally also provided with a time stamp,
- wherein, in a third step, 3D data of the individual, spatially corresponding measuring points of the first and the further measurement or measurements are compared with one another by means of an algorithm programmed in the computing and/or evaluation unit, and, in the event that changes in the 3D data of spatially corresponding measuring points of the first and the further data set are detected, the fourth step and the following further steps are executed, **characterized in that**
- without prior execution of the third step, in a fourth step, the first and the further data set/the further data sets (3D point cloud/3D point clouds) are checked by means of an algorithm programmed in the computing and/or evaluation unit to ascertain whether subsets of the 3D data contained therein characterize a three-dimensional body or a piece of cargo (6.1) and, if applicable, are stored as a 3D data cluster characterizing a three-dimensional body or piece of cargo (volume), indexed and optionally also provided with a time stamp,
- wherein, in a fifth step, the 3D data clusters of the first and further data sets, which data clusters characterize three-dimensional bodies or pieces of cargo determined from spatially corresponding measuring points or measuring point sets, are compared with one another by means of the algorithm in the computing and/or evaluation unit,
wherein, in the event that, during the comparison of the 3D data clusters for spatially corresponding three-dimensional bodies or pieces of cargo of the first and further data sets/further data sets, changes in the 3D data clusters are determined that characterize spatial changes in the spatially corresponding three-dimensional bodies or pieces of cargo within a time interval, a signal which describes these changes and can be further processed is provided by the computing and/or evaluation unit.

2. Method according to claim 1, in which, in the third step, the 3D data of the first and the further measurement/further measurements are compared with one another, and in the event that a number of changes (7) in the 3D data exceeding a predetermined threshold value is detected, the steps according to claim 1 following the third step are executed.

3. Method according to claim 1 or claim 2, in which the interior of the cargo space (1) is periodically measured three-dimensionally.

4. Method according to any of claims 1 to 3, in which, during the first and second steps of the three-dimensional measurement of the bodies or pieces of cargo located in the cargo space, the parameters of said bodies or pieces of cargo, in particular with regard to their position and their width, height and depth, are stored as 3D data clusters and optionally indexed and/or provided with a time stamp.

5. Method according to any of claims 1 to 4, in which the 3D data are detected in such a way that 2D data of a 2D image detected by a sensor or a camera are determined and that distance information is determined for each image point (pixel) of the 2D image, wherein, in the third step, only the 2D data of the individual, spatially corresponding measuring points of the first and the further measurement/further measurements are compared with one another by means of an algorithm programmed in the computing and/or evaluation unit, and, in the event that changes in the 2D data of spatially corresponding measuring points of the first and the further data set/further data sets are detected, the further method steps are executed by incorporating the distance information or the 3D data for each measuring point.

6. Method according to any of claims 1 to 5, in which the change in the 3D data compared to the previous measurements is checked for a positioning of a body or piece of cargo that changes with the same or varying signs in the spatial x-, y-, or z-direction.

7. Method according to any of claims 1 to 6, in which the change in the 3D data compared to the previous measurements is checked for a spatial change in a 3D data cluster characterizing an indexed three-dimensional body or piece of cargo.

8. Method according to any of claims 1 to 7, in which the sensor is designed as an optical depth sensor, in particular as a time-of-flight camera or stereo camera.

9. Method according to any of claims 1 to 8, in which the sensor is designed as a LiDAR sensor or laser scanner.

10. Method according to any of claims 1 to 9 for monitoring a cargo space belonging to a vehicle, in which the sensor is arranged on a wall or boundary of a cargo space, and the measuring range of the sensor comprises the entire cargo space.

11. Method according to any of claims 1 to 10, in which the confidence level and completeness of the changed 3D data of the further data set or of one of the further data sets is checked, and/or a threshold value for noise during the measurement or classification is set.

12. Method according to any of claims 1 to 11, in which a visual display of the cargo space, the spatial allocation of the bodies or pieces of cargo in the cargo space and the current cargo status is displayed on a monitor in the form of a three-dimensional cargo image.

13. Method according to any of claims 2 to 12, in which the periodic measurement of the 3D data of each measuring point is executed at a frequency of 1 to 5 Hz.

14. Method according to any of claims 1 to 13, in which the further processable signal is provided for storage in data processing systems, in particular for use in control devices and for use and processing within a data communication system.

15. Device for monitoring a cargo space, for carrying out the method according to claims 1 to 14, wherein the device comprises at least one distance-measuring, depth-sensitive sensor for repeated, three-dimensional measurement of the cargo space as well as a computing and/or evaluation unit which has a programmed algorithm, wherein by means of the computing and/or evaluation unit and the algorithm, the 3D data of each data set obtained by repeated measurement, which 3D data describe each measuring point of any bodies or pieces of cargo (6, 7, 8, 11) located in the cargo space, are compared with one another using a method according to claims 1 to 14, and, in the event of detected changes, a processable signal is provided.

16. Vehicle comprising a cargo space, in particular a truck or a train convoy, wherein the vehicle comprises a device for monitoring a cargo space according to claim 15.

## Revendications

1. Procédé mis en œuvre par ordinateur pour la détection de corps ou de parties de chargement en mouvement à l'intérieur d'un espace de chargement, dans lequel l'espace de chargement (1) est mesuré en trois dimensions avec au moins un capteur sensible à la profondeur et mesurant les distances, et les distances actuelles de points de mesure ou d'ensembles de points de mesure d'éventuels corps ou parties de chargement (6, 6.1) se trouvant dans l'espace de chargement sont détectées par le capteur en tant que valeurs de mesure sous forme de données 3D,
- dans lequel, dans une première étape, lors d'une première mesure, les données 3D décrivant chaque point de mesure d'éventuels corps ou parties de chargement (6, 6.1) se trouvant dans l'espace de chargement sont mémorisées sous la forme d'un premier ensemble de données (nuage de points 3D) dans une unité de calcul et/ou d'évaluation et sont éventuellement pourvues d'un horodatage,
- dans lequel, dans une deuxième étape, au moins une autre mesure tridimensionnelle subséquente est effectuée et les données 3D décrivant les points de mesure correspondants des corps ou parties de chargement (6, 6.1) se trouvant dans l'espace de chargement sont mémorisées dans l'unité de calcul et/ou d'évaluation en tant qu'autres ensembles de données et sont également éventuellement pourvues d'un horodatage,
- dans lequel, dans une troisième étape, des données 3D des points de mesure individuels et correspondant localement de la première et de la ou des autres mesures sont comparées entre elles au moyen d'un algorithme programmé dans l'unité de calcul et/ou d'évaluation et, dans le cas où des modifications des données 3D de points de mesure se correspondant spatialement du premier et de l'autre ensemble de données sont détectées, la quatrième étape et les autres étapes suivantes sont exécutées, **caractérisé en ce que**
- sans exécution préalable de la troisième étape, on vérifie dans une quatrième étape le premier ensemble de données et le ou les autres ensembles de données (nuages de points 3D) au moyen d'un algorithme programmé dans l'unité de calcul et/ou d'évaluation pour savoir si des ensembles partiels des données 3D qu'ils contiennent caractérisent un corps ou une partie de chargement (6.1) tridimensionnel et, le cas échéant, ils sont mémorisés, indexés et également éventuellement pourvus d'un horodatage en tant que grappe de données 3D caractérisant un corps ou une partie de chargement tridimensionnel (volume),
- dans lequel, dans une cinquième étape, les grappes de données 3D du premier ensemble de données et des autres ensembles de données, lesquels caractérisent des corps ou parties de chargement tridimensionnels déterminés à partir de points de mesure ou d'ensembles de points de mesure correspondant localement, sont comparés entre eux au moyen de l'algorithme dans l'unité de calcul et/ou d'évaluation,
dans lequel, dans le cas où, lors de la comparaison des grappes de données 3D pour des corps ou parties de chargement tridimensionnels correspondant localement du premier ensemble de données et des autres ensembles de données, des modifications des grappes de données 3D sont déterminées, lesquelles caractérisent des modifications spatiales des corps ou parties de chargement tridimensionnels correspondant localement à l'intérieur d'un intervalle de temps, un signal décrivant lesdites modifications et pouvant être traité ultérieurement est fourni par l'unité de calcul et/ou d'évaluation.

2. Procédé selon la revendication 1, dans lequel, dans la troisième étape, les données 3D de la première mesure et de la ou des autres mesures sont comparées entre elles et, dans le cas où un nombre de modifications (7) des données 3D dépassant une valeur seuil prédéfinie est détecté, les étapes suivant la troisième étape selon la revendication 1 sont exécutées.

3. Procédé selon la revendication 1 ou 2, dans lequel l'intérieur de l'espace de chargement (1) est mesuré périodiquement en trois dimensions.

4. Procédé selon l'une des revendications 1 à 3, dans lequel, déjà lors de la première et de la deuxième étape de mesure tridimensionnelle des corps ou parties de chargement se trouvant dans l'espace de chargement, leurs paramètres sont mémorisés sous forme de grappes de données 3D, en particulier en ce qui concerne leur position et respectivement leur largeur, leur hauteur et leur profondeur, et sont éventuellement indexés et/ou pourvus d'un horodateur.

5. Procédé selon l'une des revendications 1 à 4, dans lequel les données 3D sont détectées sous une forme telle que, d'une part, des données 2D d'une image 2D détectée par un capteur ou une caméra sont déterminées et que, d'autre part, des informations de distance sont déterminées pour chaque point d'image (pixel) de l'image 2D, dans lequel, dans la troisième étape, seules les données 2D des points de mesure individuels correspondant localement de la première mesure et de la ou des autres mesures sont comparées entre elles au moyen d'un algorithme programmé dans l'unité de calcul et/ou d'évaluation et, dans le cas où des modifications des données 2D de points de mesure se correspondant localement du premier ensemble de données et du ou des autres ensembles de données sont détectées, les autres étapes de procédé sont exécutées en intégrant les informations de distance ou les données 3D pour chaque point de mesure.

6. Procédé selon l'une des revendications 1 à 5, dans lequel la modification des données 3D par rapport aux mesures précédentes est vérifiée pour un positionnement d'un corps ou d'une partie de chargement changeant avec le même signe ou un signe différent dans la direction spatiale x, y ou z.

7. Procédé selon l'une des revendications 1 à 6, dans lequel la modification des données 3D par rapport aux mesures précédentes est vérifiée pour une modification spatiale d'une grappe de données 3D caractérisant un corps ou une partie de chargement tridimensionnel indexé.

8. Procédé selon l'une des revendications 1 à 7, dans lequel le capteur est configuré comme un capteur optique de profondeur, en particulier comme une caméra à temps de vol ou une caméra stéréoscopique.

9. Procédé selon l'une des revendications 1 à 8, dans lequel le capteur est un capteur LiDAR ou un scanner laser.

10. Procédé selon l'une des revendications 1 à 9 pour la surveillance d'un espace de chargement appartenant à un véhicule, dans lequel le capteur est disposé sur une paroi ou une limite d'un espace de chargement et la zone de mesure du capteur comprend l'ensemble de l'espace de chargement.

11. Procédé selon l'une des revendications 1 à 10, dans lequel le niveau de confiance et l'intégrité des données 3D modifiées de l'autre ensemble de données ou de l'un des autres ensembles de données sont vérifiés et/ou une valeur seuil pour un bruit lors de la mesure ou de la classification est fixée.

12. Procédé selon l'une des revendications 1 à 11, dans lequel une représentation visuelle de l'espace de chargement, de l'affectation locale des corps ou parties de chargement dans l'espace de chargement et de l'état de chargement actuel est affichée sur un moniteur sous la forme d'une image tridimensionnelle de chargement.

13. Procédé selon l'une des revendications 2 à 12, dans lequel la mesure périodique des données 3D de chaque point de mesure est effectuée à une fréquence allant de 1 à 5 Hz.

14. Procédé selon l'une des revendications 1 à 13, dans lequel le signal pouvant être traité ultérieurement est fourni pour être mémorisé dans des systèmes de traitement de données, en particulier pour être utilisé dans des dispositifs de commande et pour être utilisé et traité au sein d'un système de communication de données.

15. Dispositif pour la surveillance d'un espace de chargement pour la mise en œuvre du procédé selon les revendications 1 à 14, dans lequel le dispositif présente au moins un capteur sensible à la profondeur et mesurant les distances pour la mesure tridimensionnelle répétée de l'espace de chargement, ainsi qu'une unité de calcul et/ou d'évaluation comportant un algorithme programmé, dans lequel, au moyen de l'unité de calcul et/ou d'évaluation et de l'algorithme, les données 3D décrivant chaque point de mesure d'éventuels corps ou parties de chargement (6, 7, 8, 11) se trouvant dans l'espace de chargement de chaque ensemble de données obtenu par mesure répétée sont comparées entre elles avec un procédé selon les revendications 1 à 14 et, en cas de modifications déterminées, un signal pouvant être traité est fourni.

16. Véhicule comportant un espace de chargement, en particulier camion ou rame de voitures, dans lequel le véhicule présente un dispositif pour la surveillance d'un espace de chargement selon la revendication 15.
